# EUROPEAN PATENT APPLICATION

(11) **EP 2 806 016 A1**
(43) Date of publication of application: **26.11.2014**
(21) Application number: 13003327.7
(22) Date of filing: 01.07.2013
(51) Int. Cl.: C10L 9/08

(54) **Method for conducting a biomass torrefaction process, installation for conducting biomass process, torrified biomass and a method for puryfying flue gases from torrefaction process**

(30) Priority: 22.05.2013 PL 40403713
(71) Applicant: BonEffice sp. z o.o., 02-787 Warszawa (PL)
(72) Inventor: Gladek, Lechoslaw, 00-354 Warszawa (PL); Blasiak, Wlodzimierz, 13150 Saltsjö-Duvnäs (SE)
(74) Representative: Lazewski, Marek

(57) **Abstract**

The invention relates to a method for conducting the biomass torrefaction process, the installation for conducting biomass torrefaction process, torrefied biomass obtained by said method and a method for purifying flue gases from the torrefaction process.

## Description

### Field of the Invention

The present invention relates to a method for conducting a biomass torrefaction process, installation for conducting biomass torrefaction process, torrefied biomass obtained by said process and method for purifying flue gases from torrefaction process.

### State of the art

The term biomass covers a wide range of materials with heterogeneous structure such as wood, post-agricultural residues and fast-growing trees. Raw biomass however, has a low energy density, high water content and is difficult to process into small particles. For this reason, transportation of biomass is expensive. Furthermore, biomass can absorb moisture during storage and be subject to putrefaction. These properties have a negative impact on the process of biomass transformation into energy. For this reason, processes are needed to improve the characteristics of the biomass, in order to make it an alternative to fossil fuels such as coal.

Therefore, biomass pretreatment methods are sought. One such process is a torrefaction. The torrefaction is a partial pyrolysis process of biomass that is carried out in the absence of oxygen at atmospheric conditions, typically at a temperature in the range of 200-320°C. The temperature range is what makes the fundamental difference between torrefaction and pyrolysis of biomass, which occurs at much higher temperatures, such as 400-500°C or even 900°C.

The main goal of the torrefaction process is to decompose hemicellulose, which is a polymer that is responsible for the foamy structure of biomass and its low grinding coefficient. Hemicellulose is decomposed at temperatures from 150°C to 280°C. Other components of biomass, cellulose and lignin, decompose at higher temperatures.

In the laboratory and pilot experiments, nitrogen is often used as means for heating the biomass in order to dry it, and then for its torrefaction. In some applications, superheated steam is also used as one of the torrefaction agents.

The aim of this process is to produce a fuel with a higher calorific value than the raw biomass and a higher grinding coefficient, which in turn allows for reduction in the energy expenditure for milling and a production of small fuel particles, which can be fed to the burners.

The torrefaction process is also often used for the "energy densification" of the biomass, in order to obtain a fuel, which has a much higher calorific value calculated per unit volume and, consequently, which is much cheaper to transport.

An additional feature of the torrefied biomass is its resistance to biological degradation under the influence of biological factors and weather conditions, as well as low moisture absorption.

Despite the extensive knowledge about the torrefaction process and numerous tests that have been carried out on the laboratory scale and in pilot studies, there is little practical applications of this process on the industrial scale, especially in the power industry, where fuel consumption is very high, so the torrefaction installation must be very large.

WO2007/078199 describes a process, in which the biomass is dried in a first step in a co-current process and then in a second stage, is subject to a counter-current torrefaction process.

WO2011/031580 describes a torrefaction installation consisting of a mill which is heated by the heat coming from a combustion chamber and fed with the raw biomass from storage tank, a cyclone and a filter, a condenser and a combustion chamber. The torrefied biomass separated from the flue gas stream from the mill is not used as a fuel. The gas obtained in the condenser is used as a synthesis gas and as a fuel in the combustion chamber. This document does not mention the separation of substances harmful to the environment from the process streams.

The application US2012/0159842 describes biomass torrefaction installation, which includes a reactor, a cyclone, a heat exchanger and a steam generator. The gas form the torrefaction process is separated from the solids in the cyclone, passed through the heat exchanger, and recycled to the reactor. The steam generated in the steam generator, e.g. by a flue gases from the reactor, is fed into the reactor as an additional means for controlling the oxygen concentration in the process, or as a cooling stream or inert purging gas. Separate control units are used to control the emission of harmful substances.

The application US2012/233914 describes an installation containing, i.a. a biomass drying unit, a cyclone placed upstream of the reactor, a heat exchanger and a combustion chamber. The described installation uses superheated steam obtained in the biomass drying process. This steam is used for the drying process and in the torrefaction process. This document is silent about the separation of substances harmful to the environment from the process streams.

Publication "Global Markets and Technologies for torrefied wood in 2002" describes, inter alia, the use of superheated steam from the biomass drying process as one of the torrefaction means in the torrefaction process.

One of the problems resulting from the use of torrefaction process is formation of by-products in the flue gases and an excess amount of steam contaminated with these products. The composition of the flue gases in the torrefaction process is the following:
89.3% - steam,
4.8% - acetic acid,
3.3% - CO₂,
1.2% - methanol,
0.2% - furfural,
0.1% - CO
0.1% - formic acid,
1% - plurality of different compounds, which are in a liquid state at room temperature.

Thus, in order to start the technical operation of the installation, it is necessary to design such a process solution, which would allow for an easy use of the torrefaction process on an industrial scale and which in the same time would not be burdensome for the environment.

The method and installation of the present invention provide the solution of the technical problems related to the practical use of the torrefaction process.

### Summary of the Invention

The present invention relates to a method of conducting the biomass torrefaction process, comprising
a) feeding the biomass into the reactor, with the flow control,
b) feeding the torrefaction and drying agent, which is a dry steam, in counter-stream to the biomass stream,
c) removing the torrefied biomass form the reactor,
   wherein
d) flue gas stream from the reactor
   d1) is directed to the unit separating solid particles from the gas phase, and then
   d2) dust-free gases from the unit separating solid particles from the gas phase are directed to the absorbing unit,
   d3) the purified gas stream from the absorbing unit is directed to a condenser, where the condensation process of the condensable gas components occurs,
   d4) the resulting gas-water mixture from the condenser is directed to a degasser,
   d5) the gas stream from the degasser is directed to the combustion chamber, and
   d6) gases are burned in the combustion chamber to yield CO₂ and steam,
e) torrefied biomass dust streams from the unit separating solid particles from the gas phase are directed to torrefied biomass stream directed from the reactor, wherein a portion of the torrefied biomass dust stream is directed to the combustion chamber,
f) water formed in the degasser intended for the steam production is fed to a steam superheater, and the excess water is discharged from the degasser tank,
g) superheated steam from the superheater is directed to the reactor as the torrefaction and drying agent.

Preferably, torrefied biomass removed from the reactor and the unit separating solid particles from the gas phase is cooled to a temperature of about 80-110°C.

In a preferred embodiment of the invention, the unit separating solid particles from the gas phase includes a cyclone and a bag filter. In this embodiment, the torrefied biomass dust streams from the cyclone and bag filter are combined, cooled to a temperature of about 80-110°C and directed to torrefied biomass stream directed from the reactor, wherein a portion of the torrefied biomass dust stream is directed to the combustion chamber.

In process step g) the superheated steam is preferably cooled to a temperature in the range of 150-300°C by water injection.

Preferably, the stream of products of the reaction with the absorber is directed to the separating unit.

Preferably, dry steam at a temperature of 150-300°C, more preferably at a temperature of 260-280°C, and most preferably at a temperature of 260°C, is used as a torrefaction and drying agent.

The present invention also relates to an installation for conducting the torrefaction process, comprising
a reactor for the biomass torrefaction comprising a biomass inlet, a torrefaction and drying agent inlet, a flue gases outlet and a torrefied biomass outlet,
a unit separating solid particles from the gas phase comprising an inlet connected to the flue gas outlet of the reactor, a gas outlet and a torrefied biomass outlet,
wherein the torrefied biomass outlet of the unit separating solid particles from the gas phase is connected to the conduits connecting the torrefied biomass outlet of the reactor and the combustion chamber,
an absorbing unit comprising a gas inlet connected to the gas outlet of the unit separating solid particles from the gas phase, a gas outlet and an outlet for discharging the absorption process products,
a condenser comprising an inlet connected to the gas outlet of the absorbing unit and an outlet,
a degasser comprising an inlet connected to the gas outlet of the condenser, a gas outlet and a water outlet,
a combustion chamber comprising a gas inlet connected to the gas outlet of the degasser, and a flue gases outlet, and optionally an air inlet and a fuel inlet,
a steam superheater heated by a heat provided by the combustion chamber, steam superheater comprising a water inlet connected to the water outlet of the degasser, and a superheated steam outlet connected to the torrefaction and drying agent inlet of the reactor.

Preferably, the installation of the invention comprises a biomass dispenser providing a biomass stream to the biomass inlet of the reactor.

In another preferred embodiment, the torrefied biomass outlet of the reactor is connected to a cooling unit.

In a particularly preferred embodiment of the invention, the unit separating the solid particles from the gas phase comprises a cyclone comprising an inlet connected to the flue gas outlet of the reactor, a gas outlet and a torrefied biomass outlet; and a bag filter comprising an inlet connected to the gas outlet of the cyclone, a gas outlet connected to the gas inlet of the absorbing unit and a torrefied biomass outlet. In this particularly preferred embodiment of the invention, the torrefied biomass outlets of the cyclone and the bag filter are connected to the cooling unit.

In a preferred embodiment of the invention, the combustion chamber is combined with the steam superheater.

Preferably, the outlet for discharging the absorption process products of the absorbing unit is connected to the separating unit.

The invention also relates to torrefied biomass obtained according to the process of the invention.

The invention also provides a method for purifying flue gases from the torrefaction process, including
a) dedusting of flue gas stream from the reactor in the unit separating solid particles from the gas phase, then
b) purification of the dust-free gases in the absorbing unit,
c) condensation of the condensable components of the purified gas from the absorbing unit in the condenser,
d) directing the gas-water mixture from the condenser to the degasser,
e) separating water from the gases,
f) directing the gas stream from the degasser to the combustion chamber,
g) combustion of the gases in the combustion chamber to yield CO₂ and steam.

Preferably, the separation of solid particles from the gas phase includes a cyclone and a bag filter.

### Detailed Description of the Invention

According to the present invention, the torrefaction process can be conducted at a temperature range allowing for the hemicellulose decomposition, i.e. in the range of 150°C to 280°C. Preferably, the temperature range is 150 to 300°C, more preferably the temperature range is 260-280°C, and most preferably the temperature is 260°C. However, it is possible to carry out the process at a temperature from range of 200-360°C, 220-350°C, 225-320°C, 250-300°C, or 260-290°C. Skilled person in the art could readily select a torrefaction process temperature suitable for the process conditions, the type of reactor or the type of raw biomass used in the process.
Any reactor allowing or conducting of the torrefaction process employing superheated steam as a torrefaction and drying agent can be used in the method and installation of the present invention.

The torrefied biomass stream exiting installation of the present invention may be subjected to additional treatment, adjusted for the specific purpose of the torrefied biomass. An example of such a process is pelletisation.

Prior to removal from the installation, the torrefied biomass can be cooled to a temperature in the range of 80-110°C, preferably to a temperature of 80°C in any cooling unit known in the art. It should be understood that according to the invention, the torrefied biomass may be cooled to any desired temperature, depending on the specific practical application.

The unit separating the solid particles from the gas phase may include any known separating and filtering units, however, tests have shown that it is particularly preferred to use an assembly comprising a cyclone and a bag filter, as they ensure effective separation fine particles of torrefied biomass from the process gas stream. Cyclone separation, i.e. method of separating solid particles and liquids separation using a vortex separation, is well known in the art. Exemplary unit of this type us described in US 7,159,723, but according to the invention any conventional cyclone may be used.

The outlet of the unit separating solid particles from the gas phase can be connected to a cooling unit that cools down the fine torrefied biomass/torrefied biomass dust exiting the unit separating solid particles from the gas phase to a temperature from the range of 80-110°C, preferably to a temperature of 80°C. Any cooling unit known in the art may be used for this purpose. In a particularly preferred embodiment of the invention, the torrefied biomass outlets of a cyclone and a bag filter are connected to the cooling unit.

For example, without limiting the scope of the invention, the cyclone can allow for the separation of a bit larger particles, for example greater than 10 µm, and the bag filter can allow for the separation of particles smaller than 10 µm. It should be understood, that it is possible to use elements allowing for sieving particles having size in the other ranges. Skilled person will be able to easily select a unit suitable for the particular application, for example, adapted to the process conditions, the type of reactor or the type of raw biomass used in the process.

The function of the absorbing unit is to trap the acidic substances (acetic acid, formic acid, phenols and sulfur dioxide) contained in the flue gas stream from the reactor. In a preferred embodiment of the invention, the absorber with the particulate limestone is used for this purpose, however any other unit providing similar function known in the art may be used, for example, a reactor with another substance that traps the acidic substances. Skilled person will be able to easily select a unit suitable for the particular application, for example, adapted to the process conditions, the type of reactor, the type of raw biomass used in the process or a substance to be captured.

The installation of the present invention comprises a separation unit for recovering any commercially valuable substances. This unit may include elements such as a crystallizer, a decanter or a separator. In a preferred embodiment of the invention said substance is calcium acetate, although within the scope of the invention it is possible to recover any other substance present in the process gas stream. Skilled person will be able to easily select a unit suitable for the particular application, for example, adapted to the process conditions, the type of reactor, the type of raw biomass used in the process or a substance to be recovered.

The condenser used in the installation of the present invention has two functions - it condenses condensable substances contained in the gas stream from the absorber, and cools them, and the generated heat can be used in the process or for the municipal purposes. Preferably, a single unit that has both of these functions, which uses water as a cooling agent, is used in the installation of the present invention. However, according to the invention, it is possible to use any other unit known in the art that provides said functions. Skilled person will be able to easily select a unit suitable for the particular application, for example, adapted to the process conditions, the type of reactor or the type of raw biomass used in the process.

Any degasser that allows to separate water from gaseous components, such as, for example, without limiting the scope of the invention, carbon dioxide, carbon monoxide and methanol, can be used in the method and the installation of the invention. The degasser should comprise a water storage tank and means allowing for directing a portion of the water to the steam superheater and the water excess outside the installation. Skilled person will be able to easily select a unit suitable for the particular application, for example, adapted to the process conditions, the type of reactor or the type of raw biomass used in the process.

The role of the combustor and the superheater is to, respectively, provide the heat used in the process of the present invention and to product the steam used as a torrefaction and drying agent in the reactor. Generally, any combustion chamber allowing for the use of fine torrefied biomass as fuel can be used according to the invention. The combustion chamber can be fed with fuel (primary or supplemental) and air, if necessary. Thus, the chamber may additionally comprise a fuel inlet and an air inlet.

One superheater can be used in the installation, if its parameters will allow for obtaining steam having temperature that is sufficient for use in the torrefaction process. It is possible to apply more superheaters connected in series, if required. In a particularly preferred embodiment, the unit that is a combination of a combustion chamber and a superheater can be used.

### Advantages of the Invention

The torrefaction method of the present invention allows for eliminating of the chemical substances that cannot be discharged into the environment from the installation and for the production of commercially valuable compounds.

The main advantages of the torrefaction process of the present invention are:
- production of torrefied biomass, a product of a higher calorific value (approximately 22 MJ/kg) than the raw biomass (approximately 16 MJ/kg), which is easier to grind, and can be grinded in ball mills used for coal grinding,
- the use of superheated steam as a sole drying and torrefaction agent,
- separation of the acidic compounds from the gas phase in the absorber and formation of commercial valuable calcium acetate,
- separation of inert and flammable gases in the degasser and using them in the combustion chamber as fuel,
- use of fine torrefied biomass separated from the flue gas stream to produce steam and to overheat the steam.

### Description of figures

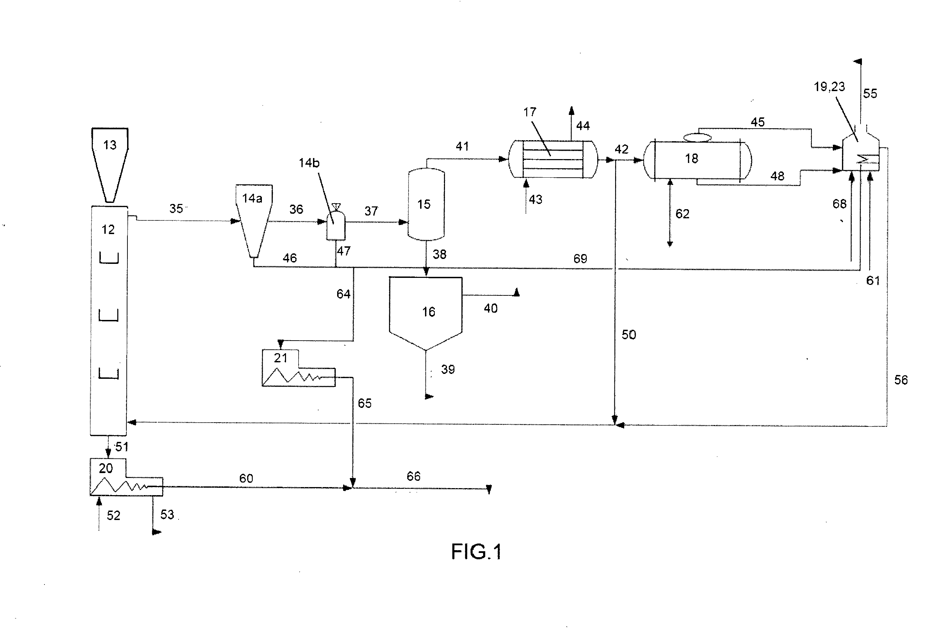

The embodiment of the invention is shown in the figure, wherein
Figure 1 shows a scheme of installation for conducting the torrefaction process of the present invention.

### Examples

Biomass torrefaction installation shown in Figure 1, comprises a reactor 12 for conducting the torrefaction process. The reactor 12 is connected to a biomass dispenser 13 that feeds the raw biomass stream to the biomass inlet of the reactor 12. The reactor 12 is also equipped with a torrefaction and drying agent inlet, a flue gas outlet and a torrefied biomass outlet. The torrefied biomass outlet of the reactor 12 is connected to the cooled container constituting a cooling unit 20 that cools a hot torrefied biomass. This unit is equipped with conduits that discharge the torrefied biomass stream outside the installation, optionally for further processing. The cooling medium in the cooling unit 20 is water.

The flue gas outlet of the reactor 12 is connected via conduits to the inlet of the cyclone 14a that constitutes a part of the unit separating solid particles from the gas phase. Cyclone 14a is also equipped with a gas outlet and an outlet for fine torrefied biomass separated from the flue gases. The second component of the unit separating solid particles from the gas phase is a bag filter 14b, comprising an inlet connected to a gas outlet of the cyclone 14a, a gas outlet and an outlet for the fine torrefied biomass separated from the flue gases. The torrefied biomass outlets of the cyclone 14a and the bag filter 14b are connected together as well as connected to cooled container constituting the cooling unit 21 for the fine torrefied biomass. Said torrefied biomass cooling unit 21 is connected to the conduits that discharge the torrefied biomass stream outside the installation. The torrefied biomass outlets of the cyclone 14a and the bag filter 14b are also connected to the combustion chamber 19. The cooling medium in the cooling unit 21 is water.

The gas outlet of the bag filter 14b is connected via conduits to the absorbing unit - absorber 15, filled with particulate limestone. The absorber 15 is also equipped with a gas outlet and an outlet for removing the products of the absorption process. The outlet of the absorber 15 for removing the products of the absorption process is connected to the crystallizer constituting the separation unit 16.

The absorber 15 is also connected to a condenser 17 that also functions as a heat exchanger. The condenser is equipped with a liquid-gas mixture outlet, as well as an inlet and outlet for water, being cooling agent.

The condenser is connected to the degasser inlet 18 equipped with a water storage tank, a gas outlet connected to the combustion chamber 19, and a water outlet connected to the steam superheater.

The embodiment of the installation of the invention shown in Figure 1 has a combustion chamber 19 combined with steam superheater 23. The combustion chamber is equipped with a gas inlet connected to the gas outlet of the degasser, the flue gas outlet, an air inlet and a fuel inlet.

The steam superheater 23 is heated by heat from the combustion chamber 19 and is equipped with a water inlet connected to the water outlet of the degasser 18 and the superheated water outlet connected via conduits to torrefaction and drying agent inlet of the reactor 12.

The conduits that connect the steam superheater 23 to the reactor 12 are additionally connected with the conduit connecting the condenser 17 and the degasser 18.

The method of the present invention is implemented as follows.

The stream of raw biomass is fed from the biomass dispenser 13 to the reactor 12. The amount of biomass fed into the reactor is controlled. Biomass moves downwardly through the reactor 12.The torrefaction and drying agent, steam 67, is supplied to the reactor 12 in counter-current to the flow of biomass. In the reactor 12, the steam 67 at a temperature of 260°C decomposes hemicellulose in the biomass molecules. As a result of biomass decomposition, an additional amount of water in the form of a steam and other substances are released. These other substances are mostly CO₂, acetic acid, methanol, formic acid, furfural, CO and various aromatic compounds, which are in the liquid state at room temperature, constituting about 1% of the released substances.

In various zones of the reactor 12, different processes occur - in the first upper zone, cold raw biomass is heated to 100°C, in the second upper zone, biomass is dried isothermally at 100°C with water evaporation, in the central zone, biomass is heated to a torrefaction temperature of 260°C, while in the lower zone, isothermal biomass torrefaction process occurs. At the torrefaction temperature, partial hemicellulose decomposition takes place. During the decomposition of hemicellulose, the gases of the composition given above are emitted.

Torrefied biomass 51 formed in the reactor 12 is directed to a cooling unit 21 and cooled with water 52,53 to a temperature in the range of 80-110°C. A stream of cool torrefied biomass 60, 66 is discharged from the installation, optionally for further processing, such as pelletizing. The product, after cooling to 80°C, is a torrefied biomass, a product with a higher calorific value (approximately 22 MJ/kg) than the raw biomass (approximately 16 MJ/kg), which is easier to grind and can be grinded in ball mills used for coal grinding.

The flue gases 35 formed during the torrefaction process in the reactor 12, containing dust and torrefaction by-products, are directed to the cyclone 14a, where dedusting and separation processes of torrefied biomass dust 46 from the gas phase are carried out. The gas stream 36 from the cyclone 14a is directed to the bag filter 14b, where the torrefied biomass dust 47 is further separated from the gas phase.

The torrefied biomass dust streams 46, 47 from the cyclone 14a and bag filter 14b are combined into a torrefied biomass dust stream 64 and cooled in a cooling unit 21 to a temperature in the range of 80-110°C.

After cooling, torrefied biomass dust stream 65 is combined with torrefied biomass stream 60 to form a stream 66, discharged from the installation, possibly for further processing.

A portion of the stream of fine torrefied biomass 46, 47 from the cyclone 14a and bag filter 14b is not directed to the cooling unit 21, but is sent directly to the combustion chamber 19, where it is burned and used to heat water and to produce steam. This torrefied biomass stream is designated with reference 69.

After the dedusting process, the gases 37 pass through the absorber 15 with particulate limestone. Limestone absorbs all acidic compounds contained in the flue gases 37 - including acetic acid, formic acid, phenols, and sulfur dioxide. This reaction produces carbon dioxide and water which is added to the circulating gas. The lower part of the reactor is cooled to condense a portion of steam on the limestone particles and release 38 soluble calcium salts to the separating unit 16 (the crystallizer). Large amounts of calcium acetate are formed in the process, which has a significant commercial value, and is contaminated by a number of other calcium salts. Crystallized product 40 and an aqueous solution 39, designated for purification, are removed from the separating unit 16.

The gas stream 41 from the absorber 15 is directed to the condenser 17, where condensable gas components are subject to condensation. The water stream 43, 44 heated in the condensation process is used for public purposes (e.g. room heating) or for heating the condensate in the thermal cycle.

The gas-water mixture 42 from the condenser 17 cooled to a temperature of about 90°C is directed to a degasser 18 where it is separated into a gas stream 45 and a steam 48, 62. The gas stream 45, consisting of carbon dioxide, carbon monoxide and methanol, from the degasser 18 is directed to the combustion chamber 19 and subjected to utilization producing CO₂ and steam discharged to the atmosphere 55. Water intended for the production of steam 48 is directed to the superheater 23 and the excess water 62 formed in the process is discharged from the degasser 18 outside the installation.

In addition to the above-mentioned fine torrefied biomass stream 69, the primary fuel or a supplemental fuel 61 and air 68 are added to the combustion chamber 19.

A highly superheated steam 56 formed in the superheater 23 is cooled to the process temperature by injection of process water 50 from the condenser 17. Water injection 50 to highly superheated steam 56 ensures the process steam temperature control. The resulting stream 67 is fed to the reactor 12 as a torrefaction and drying agent.

In another embodiment (not shown in Figure 1), steam 56 from superheater 23, is fed to a second superheater, where the temperature additionally can be raised to the required 300°C using process steam.

## Claims

1. A method for conducting biomass torrefaction process, **characterized in that** the process comprises
a) feeding the biomass into the reactor, with the flow control,
b) feeding the torrefaction and drying agent, which is a dry steam, in counter-stream to the biomass stream,
c) removing the torrefied biomass form the reactor,
wherein
d) flue gas stream from the reactor
d1) is directed to the unit separating solid particles from the gas phase, and then
d2) dust-free gases from the unit separating solid particles from the gas phase are directed to the absorbing unit,
d3) the purified gas stream from the absorbing unit is directed to a condenser, where the condensation process of the condensable gas components occurs,
d4) the resulted gas-water mixture from the condenser is directed to a degasser,
d5) the gas stream from the degasser is directed to the combustion chamber, and
d6) gases are burned in the combustion chamber to yield CO₂ and steam,
e) torrefied biomass dust streams from the unit separating solid particles from the gas phase are directed to torrefied biomass stream directed from the reactor, wherein a portion of the torrefied biomass dust stream is directed to the combustion chamber,
f) water formed in the degasser intended for the steam production is fed to a steam superheater, and the excess water is discharged from the degasser tank,
g) superheated steam from the superheater is directed to the reactor as a torrefaction and drying agent.

2. A method according to claim 1, **characterized in that** the torrefied biomass removed from the reactor and the unit separating solid particles from the gas phase is cooled to a temperature of about 80-110°C.

3. A method according to any one of claims 1-2 **characterized in that** the unit separating solid particles from the gas phase includes a cyclone and a bag filter, wherein the torrefied biomass dust streams from the cyclone and bag filter are combined, cooled to a temperature of about 80-110°C and directed to torrefied biomass stream directed from the reactor, wherein a portion of torrefied biomass dust stream is directed to the combustion chamber.

4. A method according to any one of claims 1-3, **characterized in that** the superheated steam is cooled in step g) to a temperature ranging from 150-300°C by water injection.

5. A method according to any one of claims 1-4, **characterized in that** the stream of products of the reaction with the absorbent is directed to the separation unit.

6. A method according to any one of claims 1-5, **characterized in that** dry steam at a temperature of 150-300°C, preferably at a temperature of 260-280°C, and most preferably at a temperature of 260°C, is used as a torrefaction and drying agent,.

7. An installation for conducting the torrefaction process, **characterized in that** the installation comprises
a reactor (12) for the biomass torrefaction comprising a biomass inlet, a torrefaction and drying agent inlet, an flue gas outlet and a torrefied biomass outlet,
a unit separating solid particles from the gas phase comprising an inlet connected to the flue gas outlet of the reactor (12), a gas outlet and a torrefied biomass outlet,
wherein the torrefied biomass outlet of the unit separating solid particles from the gas phase is connected to the conduits connecting the torrefied biomass outlet of the reactor (12) and the combustion chamber (19),
an absorbing unit comprising a gas inlet connected to the gas outlet of the unit separating solid particles from the gas phase, a gas outlet and an outlet for discharging the absorption process products,
a condenser (17) comprising an inlet connected to the gas outlet of the absorbing unit and an outlet,
a degasser (18) comprising an inlet connected to the gas outlet of the condenser, a gas outlet and a water outlet,
a combustion chamber (19) comprising a gas inlet connected to the gas outlet of the degasser, and a flue gas outlet and optionally an air inlet and a fuel inlet,
a steam superheater (22) heated by a heat provided by the combustion chamber, steam superheater comprising a water inlet connected to the water outlet of the degasser (18), and a superheated steam outlet connected to the torrefaction and drying agent inlet of the reactor (12).

8. The installation according to claim 7, **characterized in that** the installation comprises a biomass dispenser (13) providing a biomass stream to the inlet of the reactor (12).

9. The installation according to any one of claims 7-8, **characterized in that** the torrefied biomass outlet of the reactor (12) is connected to a cooling unit (20).

10. The installation according to any one of claims 7-9 **characterized in that** the unit separating solid particles from the gas phase comprises
a cyclone (14a) comprising an inlet connected to the flue gas outlet of the reactor (12), a gas outlet and a torrefied biomass outlet, and
a bag filter (14b) comprising an inlet connected to the gas outlet of the cyclone (14a), a gas outlet connected to the gas inlet of the absorbing unit and a torrefied biomass outlet, wherein
torrefied biomass outlets of the cyclone (14a) and the bag filter (14b) are connected to the cooling unit (21).

11. The installation according to any one of claims 7-10, **characterized in that** the combustion chamber (19) is combined with the steam superheater (22).

12. The installation according to any one of claims 7-11, **characterized in that** the outlet for discharging the absorption process products of the absorbing unit (15) is connected to the separating unit (16).

13. Torrefied biomass obtained by the method of any one of claims 1-6.

14. A method for purifying flue gases from the torrefaction process comprising
a) dedusting of flue gas stream from the reactor in the unit separating solid particles from the gas phase, then
b) purification of the dust-free gases in the absorbing unit,
c) condensation of the condensable components of the purified gas from the absorbing unit in the condenser,
d) directing the gas-water mixture from the condenser to the degasser,
e) separating water from the gases,
f) directing the gas stream from the degasser to the combustion chamber,
g) combustion of the gases in the combustion chamber to yield CO₂ and steam.

15. A method according to claim 14, **characterized in that** the unit separating solid particles from the gas phase comprises a cyclone and a bag filter.
